# EUROPEAN PATENT SPECIFICATION

(11) **EP 3 853 470 B1**
(45) Date of publication and mention of the grant of the patent: **23.08.2023**
(21) Application number: 19778719.5
(22) Date of filing: 12.09.2019
(51) Int. Cl.: F03D 1/06

(54) **WIND TURBINE ROTOR BLADE ASSEMBLY FOR REDUCED NOISE**
WINDTURBINENROTORBLATTANORDNUNG FÜR REDUZIERTE GERÄUSCHE
ENSEMBLE PALE DE ROTOR D'ÉOLIENNE DE RÉDUCTION DE BRUIT

(30) Priority: 17.09.2018 US 201816132885
(43) Date of publication of application: 28.07.2021
(73) Proprietor: General Electric Company, Schenectady, NY 12345 (US)
(72) Inventor: CARROLL, Christian, Greenville, South Carolina 29615 (US); FISHER, Murray, Greenville, South Carolina 29615 (US); PETITJEAN, Benoit Philippe, 85748 Garching b. Muenchen (DE); HERRIG, Andreas, 85748 Garching b. Muenchen (DE); WETZEL, Drew Adam, Greenville, South Carolina 29615 (US); BAKER, Jonathon Paul, Greenville, South Carolina 29615 (US)
(74) Representative: COPA Copenhagen Patents
(86) International application number: PCT/US2019/050762
(87) International publication number: WO 2020/060833

(56) References cited:
- EP-A1- 1 152 148
- US-A1- 2012 020 803
- US-A1- 2012 219 423
- US-A1- 2015 064 017

## Description

### FIELD

The present disclosure relates in general to wind turbine rotor blades, and more particularly to rotor blades having a low mass, low loads, and low noise design.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The rotor blades capture kinetic energy of wind using known airfoil principles. The rotor blades transmit the kinetic energy in the form of rotational energy so as to turn a main shaft coupling the rotor blades to a gearbox, or if a gearbox is not used, directly to the generator. More specifically, the rotor blades have a cross-sectional profile of an airfoil such that, during operation, air flows over the blade producing a pressure difference between the sides. Consequently, a lift force, which is directed from a pressure side towards a suction side, acts on the rotor blade. The lift force generates torque on the main shaft, which is geared to the generator for producing electricity. The generator then converts the mechanical energy to electrical energy that may be deployed to a utility grid.

The lift force is generated when the flow from the leading edge to the trailing edge creates a pressure difference between the top and bottom surfaces of the rotor blade. Ideally, the flow is attached to both the top and bottom surfaces from the leading edge to the trailing edge. However, when the angle of attack of the flow exceeds a certain critical angle, the flow does not reach the trailing edge, but leaves the surface at a flow separation line. Beyond this line, the flow direction is generally reversed, i.e. it flows from the trailing edge backward to the separation line. A blade section extracts much less energy from the flow when it separates. Further, flow separation can lead to an increase in blade noise. Flow separation depends on a number of factors, such as incoming air flow characteristics (e.g. Reynolds number, wind speed, in-flow atmospheric turbulence), characteristics of the blade (e.g. airfoil sections, blade chord and thickness, twist distribution, etc.), and operational characteristics (such as pitch angle, rotor speed, etc.).

For some wind turbines, a rise in noise at high wind speeds (often referred to as High Wind Speed Noise (HWSN)) has been observed. HWSN is produced by a thickening pressure-side boundary layer and, ultimately, flow separation at the rotor blade tip. Such phenomena occur if tip angles of attack and/or tip Reynolds numbers are too low. In addition, conventional rotor blades and joints thereof have certain complexities and/or loads associated therewith.

As such, the industry is continuously seeking improved rotor blades having reduced loads, improved performance, and/or increased structural efficiency.

Some prior art is disclosed in US 2012/219423 A1, EP 1152148 A1, US 2012/020803 A1, and US 2015/064017 A1.

### BRIEF DESCRIPTION

Aspects and advantages of the invention will be set forth in part in the following description, or may be obvious from the description.

In one aspect, the present disclosure is directed to a rotor blade assembly of a wind turbine. The rotor blade assembly includes a rotor blade having an aerodynamic body with an inboard region and an outboard region. The inboard and outboard regions define a pressure side, a suction side, a leading edge, and a trailing edge. The inboard region includes a blade root, whereas the outboard region includes a blade tip. The rotor blade also defines a chord and a span. Further, the inboard region includes a transitional region of the rotor blade that includes a maximum chord. Moreover, a chord slope of the rotor blade in the transitional region ranges from -0.06 to 0.06 from the maximum chord over about 15% of the span of the rotor blade.

In another embodiment, the transitional region may range from about 15% span to about 30% span of the rotor blade. According to the invention, the inboard region ranges from 0% span to 40% span from the blade root of the rotor blade in a span-wise direction and the outboard region ranges from 40% span to 100% span from the blade root of the rotor blade.

In additional embodiments, in the region of the inboard region that is not the transitional region, the chord slope may range from -0.15 to 0.20, more preferably from about -0.05 to about 0.15, and more preferably from about -0.01 to about 0.14, and in any case, in the inboard region, the chord slope does not equal to zero. In still another embodiment, a change in the chord slope is at least 0.00002 in the inboard region.

In several embodiments, the rotor blade may also include a blade root region inboard of the maximum chord within the inboard region. In such embodiments, an inflection point from positive to negative or vice versa of a second derivative of the chord slope in the blade root region may be located at less than 15% span, such as less than about 11% span.

In certain embodiments, the chord slope in the outboard region at an inflection point from concave to convex or vice versa may be less than -0.05, such as less than about -0.03. In further embodiments, the chord slope may be less than -0.1 between 30% span to 85% span from the blade root.

In additional embodiments, a location of an inflection point from concave to convex or vice versa of the chord slope may be within 80% span, such as within 78%. In another embodiment, a location of a peak chord radius of curvature may be within 80% span, such as within 78%.

In another aspect, the present disclosure is directed to a method for manufacturing a rotor blade of a wind turbine to mitigate noise during high wind speed conditions as defined in claim 10. It should be understood that the method may include any of the additional features and/or steps described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine according to the present disclosure;
FIG. 2 illustrates a perspective view of one embodiment of a rotor blade of a wind turbine according to the present disclosure;
FIG. 3 illustrates a graph of one embodiment of the chord slope in the transitional region within the inboard region of a rotor blade according to the present disclosure as compared to the chord slopes in the same region for conventional rotor blades;
FIG. 4 illustrates a graph of one embodiment of the change in the chord slope in the transitional region of the inboard region of a rotor blade according to the present disclosure as compared to the changes in the chord slopes in the same region for conventional rotor blades;
FIG. 5 illustrates a graph of one embodiment of the actual chord length 70 (in millimeters) in the transitional region of the inboard region of a rotor blade according to the present disclosure as compared to the chord lengths in the same region for conventional rotor blades;
FIG. 6 illustrates a graph of one embodiment of the radius of curvature (RoC) in the transitional region of the inboard region of a rotor blade according to the present disclosure as compared to the radii of curvature in the same region for conventional rotor blades;
FIG. 7 illustrates a graph of one embodiment of the chord slope in the outboard region of a rotor blade according to the present disclosure as compared to the chord slopes in the same region for conventional rotor blades;
FIG. 8 illustrates a graph of one embodiment of the change in the chord slope in the outboard region of a rotor blade according to the present disclosure as compared to changes in the chord slopes in the same region for conventional rotor blades;
FIG. 9 illustrates a graph of one embodiment of the actual chord length (in millimeters) in the outboard region of a rotor blade according to the present disclosure as compared to the chord lengths in the same region for conventional rotor blades;
FIG. 10 illustrates a graph of one embodiment of the radius of curvature (RoC) in the outboard region of a rotor blade according to the present disclosure as compared to the radii of curvature in the same region for conventional rotor blades; and
FIG. 11 illustrates a flow diagram of one embodiment of a method for manufacturing a rotor blade of a wind turbine to mitigate noise during high wind speed conditions according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or of the invention. Thus, it is intended that the present invention covers such modifications and variations as come within the scope of the appended claims.

Generally, the present disclosure is a rotor blade assembly for a wind turbine that is optimized for chord slope, rate of change of chord slope, and chord radius of curvature for reduced loads and improved performance. The optimization of the chord slope (e.g. between 30 and 90% of span), particularly of a jointed blade, reduces joint complexity while maintaining aerodynamic performance. In one embodiment, the rotor blade of the present disclosure may also have a larger tip chord to ensure higher Reynolds numbers. At higher Reynolds numbers, the boundary layer is less susceptible to thickening and ultimately separating. Further, the rotor blade of the present disclosure may have a reduced tip back twist, which leads to higher (i.e. less negative) tip angles-of-attack. Moreover, the rotor blade of the present disclosure may include low camber airfoils (e.g. lower camber airfoils correspond to airfoils having increased symmetry between the pressure and suction side surfaces) with relatively flat pressure sides, thereby leading to a delay in the transition and separation at low (i.e. negative) angles-of-attack. Accordingly, such features of the rotor blade of the present disclosure ensure that high wind speed noise is mitigated. In addition, the rotor blade of the present disclosure may have a larger tip chord as compared to conventional rotor blades in order to reduce the effective angles of attack by unloading the tip due to a more favorable induced angle of attack distribution. The thickness to chord ratio of the rotor blade may also be pushed outboard as compared to conventional rotor blades to increase structural efficiency.

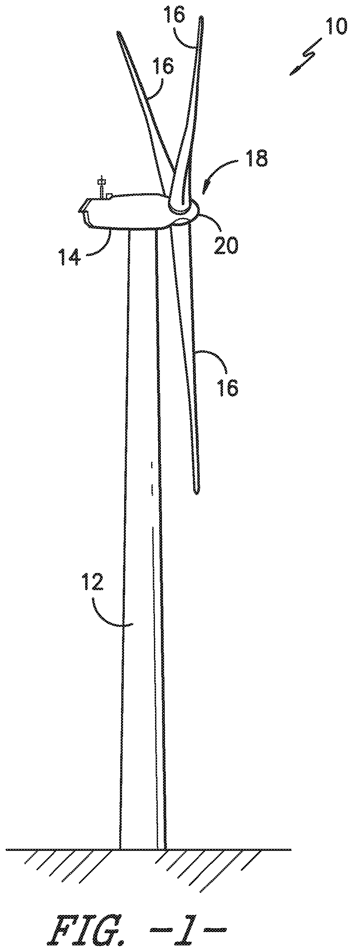

Referring now to the drawings, FIG. 1 illustrates a wind turbine 10 according to the present disclosure. As shown, the wind turbine 10 includes a tower 12 with a nacelle 14 mounted thereon. The wind turbine 10 also includes a rotor hub 18 having a rotatable 20 with a plurality of rotor blades 16 mounted thereto, which is in turn is connected to a main flange that turns a main rotor shaft (not shown). Further, the wind turbine power generation and control components are typically housed within the nacelle 14. The view of FIG. 1 is provided for illustrative purposes only to place the present invention in an exemplary field of use. It should be appreciated that the invention is not limited to any particular type of wind turbine configuration.

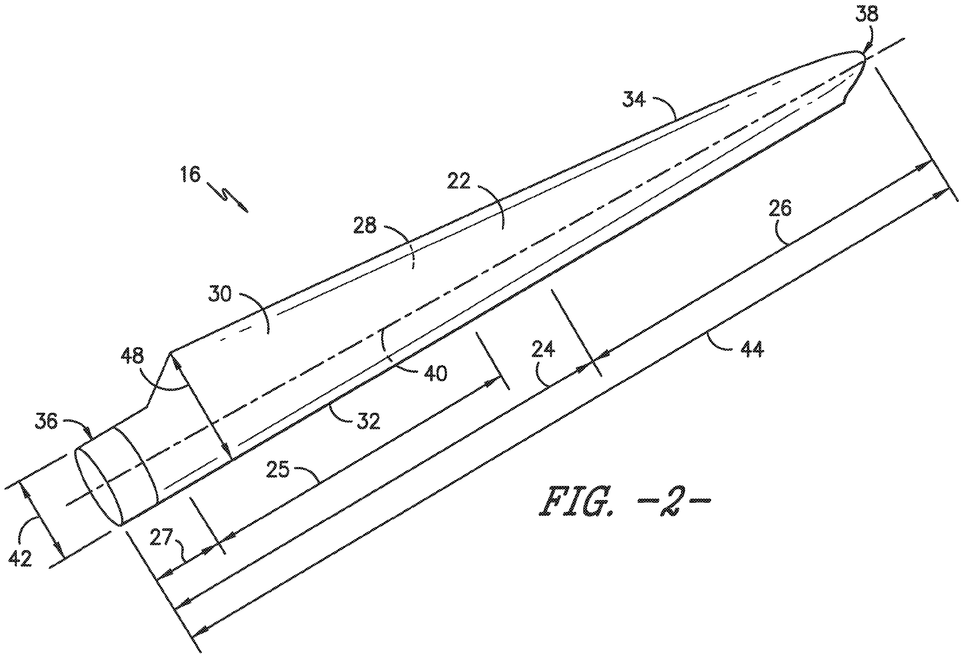

Referring now to FIG. 2, a perspective view of one of the rotor blades 16 of the wind turbine 10 of FIG. 1 is illustrates according to the present disclosure is illustrated. More specifically, as shown, the rotor blade 16 includes one or more features configured to reduce noise associated with high wind speed conditions. As shown, the rotor blade 16 includes an aerodynamic body 22 having an inboard region 24 and an outboard region 26. Further, the inboard and outboard regions 24, 26 define a pressure side 28 and a suction side 30 extending between a leading edge 32 and a trailing edge 34. Further, the inboard region 24 includes a blade root 36, whereas the outboard region 26 includes a blade tip 38.

Moreover, as shown, the rotor blade 16 defines a pitch axis 40 relative to the rotor hub 18 (FIG. 1) that typically extends perpendicularly to the rotor hub 18 and the blade root 36 through the center of the blade root 36. A pitch angle or blade pitch of the rotor blade 16, i.e., an angle that determines a perspective of the rotor blade 16 with respect to the air flow past the wind turbine 10, may be defined by rotation of the rotor blade 16 about the pitch axis 40. In addition, the rotor blade 16 further defines a chord 42 and a span 44. More specifically, as shown in FIG. 2, the chord 42 may vary throughout the span 44 of the rotor blade 16. Thus, a local chord may be defined for the rotor blade 16 at any point on the blade 16 along the span 44.

The inboard region 24 ranges from 0% span to 40% of the span 44 of the rotor blade 16 from the blade root 36 in the span-wise direction and the outboard region 26 ranges from 40% span to 100% span 44 from the blade root 36 of the rotor blade 16. As used herein, terms of degree (such as "about," "substantially," etc.) are understood to include a +/- 10% variation.

Referring still to FIG. 2, the inboard region 24 includes a transitional region 25 of the rotor blade 16 that includes a maximum chord 48. More specifically, in one embodiment, the transitional region 25 may range from about 15% span to about 30% span of the rotor blade 16. In addition, as shown, the rotor blade 16 also includes a blade root region 27 inboard of the maximum chord 48 and within the inboard region 24.

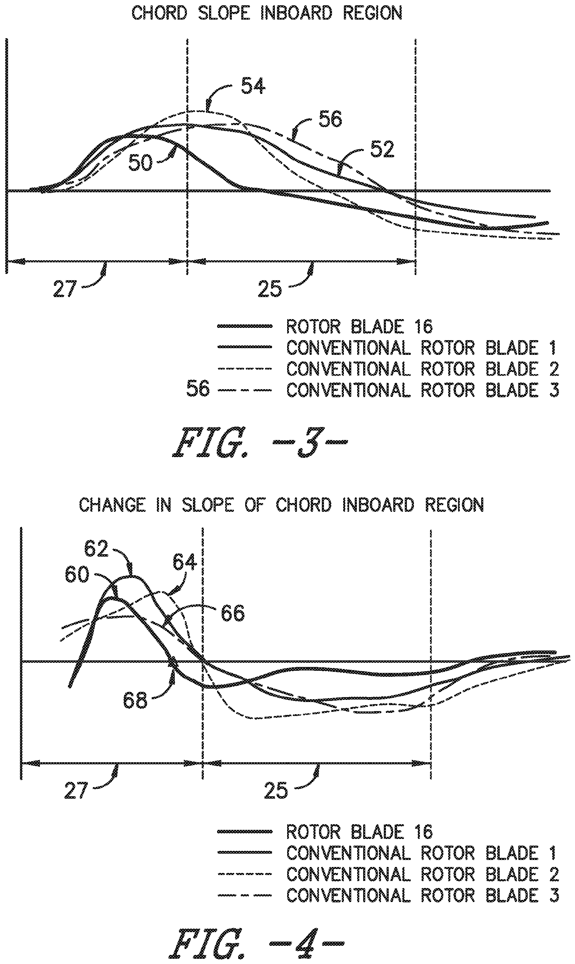

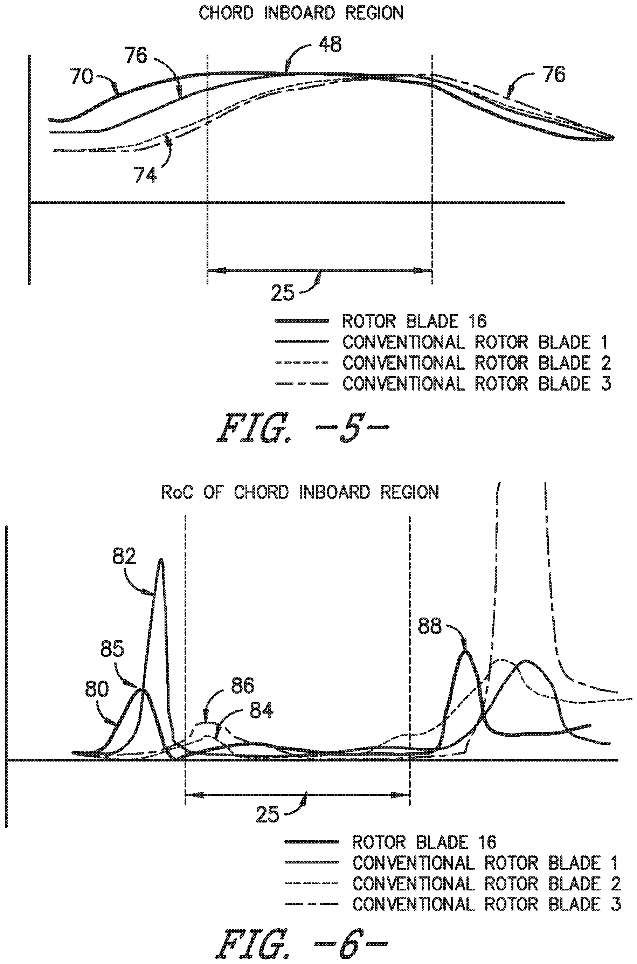

Referring now to FIGS. 3-6, various graphs illustrating chord characteristics in the transitional region 25 of the inboard region 24 of multiple rotor blades are illustrated. In each of the graphs, four curves are illustrated representing the rotor blade 16 of the present disclosure, the rotor blade 16 not necessarily falling under the scope of the claims, as well as three conventional rotor blades for comparison. More particularly, FIG. 3 illustrates a graph of one embodiment of the chord slope 50 in the transitional region 25 (e.g. from about 15% span to about 30% span) within the inboard region 24 of the rotor blade 16 of the present disclosure as compared to the chord slopes 52, 54, 56 in the same region for conventional rotor blades. FIG. 4 illustrates a graph of one embodiment of the change 60 in the chord slope in the transitional region 25 (e.g. from about 15% span to about 30% span) of the inboard region 24 of the rotor blade 16 of the present disclosure compared to the changes 62, 64, 66 in the chord slope in the same region for conventional rotor blades. FIG. 5 illustrates a graph of one embodiment of the actual chord length 70 (in millimeters) in the transitional region 25 (e.g. from about 15% span to about 30% span) of the inboard region 24 of the rotor blade 16 of the present disclosure compared to the chord lengths 72, 74, 76 in the same region for conventional rotor blades. FIG. 6 illustrates a graph of one embodiment of the radius of curvature (RoC) 80 in the transitional region 25 (e.g. from about 15% span to about 30% span) of the inboard region 24 of the rotor blade 16 of the present disclosure compared to the radius of curvatures 82, 84, 86 in the same region for conventional rotor blades.

For example, as shown in FIG. 3, the chord slope 50 of the illustrated rotor blade 16 in the transitional region 25 may range from about -0.10 to about 0.10 from the maximum chord 48 over about 15% of the span of the rotor blade 16. More specifically, as shown, the chord slopes of the illustrated rotor blades in the transitional regions may range from about -0.06 to about 0.06 from the maximum chord over about 15% of the span of the rotor blade 16. Further, as shown in FIG. 5, the chord length 70 of the rotor blade 16 of the present disclosure changes less dramatically, e.g. from about 15% span to about 30% span. Further, as shown in FIG. 4, an inflection point 68 from positive to negative or vice versa of a second derivative of the chord slope 50 (i.e. the rate of change of the chord slope 50) in the blade root region 27 may be located at less than about 15% span. More specifically, as shown in FIG. 4, the inflection point 68 from positive to negative or vice versa of the second derivative of the chord slope 50 may be located at about 11% span. As used herein, an inflection point generally refers to the location in a curve at which a change in the direction of curvature occurs.

In additional embodiments, as shown in FIG. 3, in the entire inboard region 24, the chord slope 50 may range from about -0.15 to about 0.20, more preferably from about -0.05 to about 0.15, and more preferably from about -0.01 to about 0.14. In addition, as shown, the chord slope 50 may not equal zero at any point in the inboard region 24 of the rotor blade 16.

Referring particularly to FIG. 4, in the illustrated embodiment, the change 60 in the chord slope in the transitional region 25 for the illustrated rotor blade 16 is at least about 0.00002, in the inboard region 24. In contrast, the change 62, 64, 66 in the chord slope for conventional rotor blades in the transitional region 25 is always less than 0.00002.

Referring particularly to FIG. 6, in the illustrated embodiment, an inflection point 88 in the radius of curvature 60 of the chord outboard of the maximum chord 48 of the rotor blade 16 of the present disclosure is located inside of about 40% span. In contrast, the inflection points of the radii of curvature of the chord outboard of the maximum chord for the conventional rotor blades are located outside of 40% span. In addition, as shown, an inflection point 85 in the radius of curvature 60 of the chord inboard of the maximum chord 48 of the rotor blade 16 of the present disclosure is located within about 11% span. In contrast, the inflection points of the radii of curvature of the chord inboard of the maximum chord for the conventional rotor blades are located outside of 40% span. Moreover, as shown, the radius of curvature 60 at the maximum chord 40 (which is illustrated at about 20% span in FIG. 6) may be greater than about 2 millimeters.

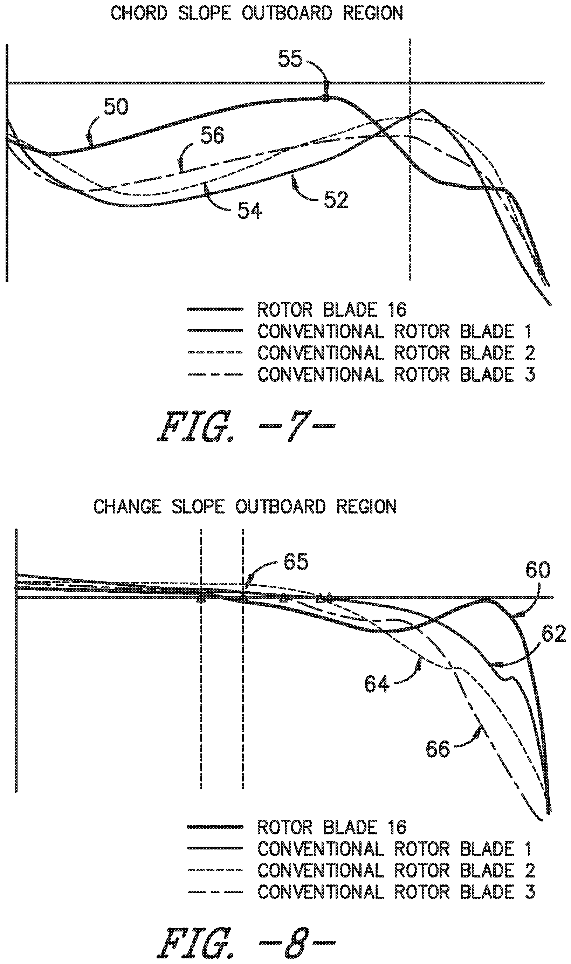

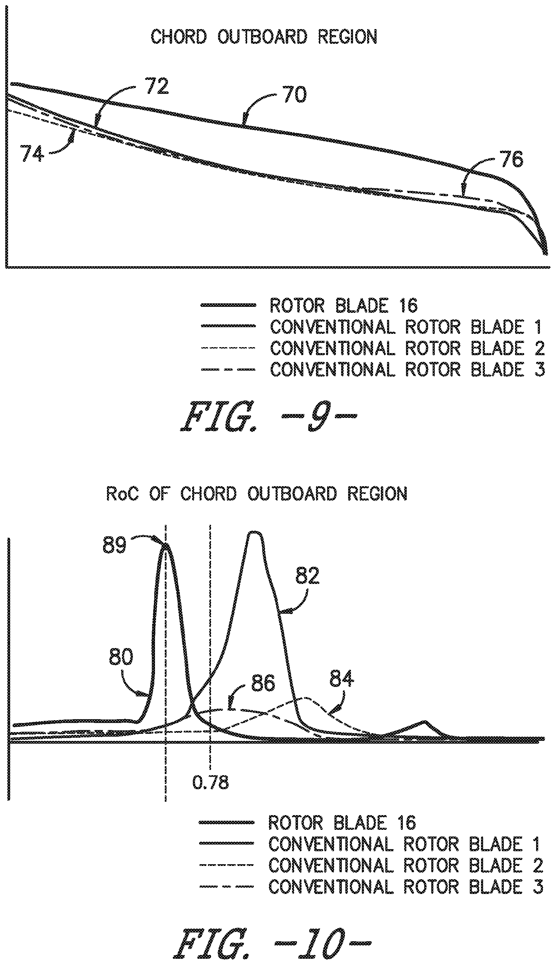

Referring now to FIGS. 7-10, various graphs illustrating chord characteristics in the outboard region 26 of multiple rotor blades are illustrated. In each of the graphs, four curves are illustrated representing the rotor blade 16 of the present invention as well as three conventional rotor blades for comparison. More particularly, FIG. 7 illustrates a graph of one embodiment of the chord slope 50 in the outboard region 26 of the rotor blade 16 of the present disclosure as compared to the chord slopes 52, 54, 56 in the same region for conventional rotor blades. FIG. 8 illustrates a graph of one embodiment of the change 60 in the chord slope in the outboard region 26 of the rotor blade 16 of the present disclosure compared to the changes 62, 64, 66 in the chord slope in the same region for conventional rotor blades. FIG. 9 illustrates a graph of one embodiment of the actual chord length 70 (in millimeters) in the outboard region 26 of the rotor blade 16 of the present disclosure compared to the chord lengths 72, 74, 76 in the same region for conventional rotor blades. FIG. 10 illustrates a graph of one embodiment of the radius of curvature (RoC) 80 in the outboard region 26 of the rotor blade 16 of the present disclosure compared to the radius of curvatures 82, 84, 86 in the same region for conventional rotor blades.

Referring particularly to FIG. 7, the chord slope 50 in the outboard region 26 (i.e. outboard of 60% span) at an inflection point 55 from concave to convex or vice versa may be less than about -0.03. More specifically, as shown in FIG. 7, the inflection point 55 from concave to convex or vice versa may be less than about -0.03. In contrast, as shown, the chord slopes 52, 54, 56 in the outboard region 26 at the inflection points from concave to convex or vice versa for conventional rotor blades is greater than -0.03.

In further embodiments, as shown in FIG. 7, the chord slope 50 may be less than about -0.10 between about 30% span to about 85% span from the blade root 36 of the rotor blade 16. In contrast, as shown, the chord slopes 52, 54, 56 in the outboard region 26 for conventional rotor blades is greater than -0.10.

Referring particularly to FIG. 8, an inflection point 65 from concave to convex or vice versa of the chord slope 50 may be within about 80% span. More specifically, as shown, the inflection point 65 from concave to convex or vice versa of the chord slope 60 may be within about 78% span. In contrast, as shown, inflection points from concave to convex or vice versa for the chord slopes 62, 64, 66 in the outboard region 26 for conventional rotor blades is outside of 80% span. In addition, as shown in FIG. 10, a location of a peak chord radius of curvature 89 in the outboard region 26 of the rotor blade 16 of the present disclosure may be within about 80% span (i.e. inboard of 80% span). More specifically, as shown, the peak chord radius of curvature 89 in the outboard region 26 for the rotor blade 16 of the present disclosure may be within or inboard of about 78% span. In contrast, as shown, the peak chord radii of curvature in the outboard region for conventional rotor blades have a peak chord radius of curvature outboard of 80% span.

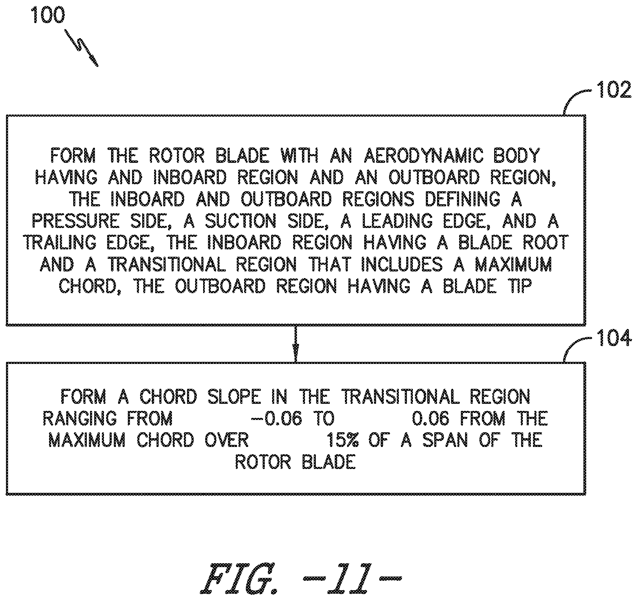

Referring now to FIG. 11, a flow diagram of one embodiment of one embodiment of a method 100 for manufacturing a rotor blade of a wind turbine to mitigate noise during high wind speed conditions is illustrated. In general, the method 100 will be described herein with reference to the wind turbine 10 and rotor blade 16 shown in FIGS. 1 and 2. However, it should be appreciated that the disclosed method 100 may be implemented with wind turbines having any other suitable configurations. In addition, although FIG. 11 depicts steps performed in a particular order for purposes of illustration and discussion, the methods discussed herein are not limited to any particular order or arrangement.

As shown at (102), the method 100 includes forming the rotor blade 16 with an aerodynamic body 22 having the inboard region 24 and the outboard region 26. Further, as mentioned, the inboard and outboard regions 24, 26 define a pressure side 28, a suction side 30, a leading edge 32, and a trailing edge 34. Moreover, the inboard region 24 includes the blade root 36 and the transitional region 25 that includes the maximum chord 48, whereas the outboard region 26 includes the blade tip 38. As shown at (104), the method 100 also includes forming a chord slope in the transitional region 25 ranging from -0.06 to 0.06 from the maximum chord over 15% of a span of the rotor blade 16.

This written description uses examples to disclose the invention, including the best mode, and also to enable any person skilled in the art to practice the invention, including making and using any devices or systems and performing any incorporated methods.

## Claims

1. A rotor blade assembly of a wind turbine (10), the rotor blade assembly comprising:
a rotor blade (16) comprising an aerodynamic body (22) having an inboard region (24) and an outboard region (26), the inboard and outboard regions (24, 26) defining a pressure side (28), a suction side (30), a leading edge (32), and a trailing edge (34), the inboard region (24) comprising a blade root (36), the outboard region (26) comprising a blade tip (38), the rotor blade (16) defining a chord (42) and a span (44);
wherein the inboard region (24) comprises from 0% span (44) to 40% span (44) from the blade root (36) of the rotor blade (16) in a span-wise direction and the outboard region (26) comprises from 40% span (44) to 100% span (44) from the blade root (36) of the rotor blade (16),
the inboard region (24) comprising a transitional region (25) of the rotor blade (16) that comprises a maximum chord (48),
**characterized in that** a chord slope (50) of the rotor blade (16) in the transitional region (25) ranges from -0.06 to 0.06 from the maximum chord (48) over 15% of the span (44) of the rotor blade (16),
wherein, in the inboard region (24), the chord slope (50) is not equal to zero.

2. The rotor blade assembly of claim 1, wherein the transitional region (25) comprises from about 15% span (44) to 30% span (44) of the rotor blade (16).

3. The rotor blade assembly of claim 1, wherein, in the region of the inboard region (24) that is not the transitional region (25), the chord slope (50) ranges from -0.15 to 0.20 and does not equal to zero.

4. The rotor blade assembly of claim 1, wherein a change in the chord slope (50) is at least 0.00002 in the inboard region (24).

5. The rotor blade assembly of any of the preceding claims, further comprising a blade root (36) region inboard of the maximum chord (48) within the inboard region (24), wherein an inflection point from positive to negative or vice versa of a second derivative of the chord slope (50) in the blade root (36) region is located at less than 15% span (44).

6. The rotor blade assembly of any of the preceding claims, wherein the chord slope (50) in the outboard region (26) at an inflection point from concave to convex or vice versa is less than -0.05.

7. The rotor blade assembly of any of the preceding claims, wherein the chord slope (50) is less than -0.1 between 30% span (44) to 85% span (44) from the blade root (36).

8. The rotor blade assembly of any of the preceding claims, wherein a location of an inflection point from concave to convex or vice versa of the chord slope (50) is within 80% span (44).

9. The rotor blade assembly of any of the preceding claims, wherein a location of a peak chord (42) radius of curvature is within 80% span (44).

10. A method for manufacturing a rotor blade (16) of a wind turbine (10) to mitigate noise during high wind speed conditions, the method comprising:
forming the rotor blade (16) with an aerodynamic body (22) having an inboard region (24) and an outboard region (26), the inboard and outboard region (26) defining a pressure side (28), a suction side (30), a leading edge (32), and a trailing edge (34), the inboard region (24) having a blade root (36) and a transitional region (25) that includes a maximum chord (48), the outboard region (26) having a blade tip (38), wherein the rotor blade (16) defining a chord (42) and a span (44), wherein the inboard region (24) comprises from 0% span (44) to 40% span (44) from the blade root (36) of the rotor blade (16) in a span-wise direction and the outboard region (26) comprises from 40% span (44) to 100% span (44) from the blade root (36) of the rotor blade (16); and,
forming a chord slope (50) in the transitional region (25) ranging from -0.06 to 0.06 from the maximum chord (48) over 15% of the span (44) of the rotor blade (16), wherein, in the inboard region (24), the chord slope (50) is not equal to zero.

11. The method of claim 10, wherein the transitional region (25) comprises from 15% span (44) to 30% span (44) of the rotor blade (16).

12. The method of claims 10 or 11, wherein, in the region of the inboard region (24) that is not the transitional region (25), the chord slope (50) ranges from -0.15 to 0.20 and does not equal to zero.

## Patentansprüche

1. Rotorblattanordnung einer Windkraftanlage (10), wobei die Rotorblattanordnung Folgendes umfasst:
ein Rotorblatt (16), umfassend einen aerodynamischen Körper (22) mit einer Innenregion (24) und einer Außenregion (26), wobei die Innen- und die Außenregion (24, 26) eine Druckseite (28), eine Saugseite (30), eine Eintrittskante (32) und eine Austrittskante (34) definieren, wobei die Innenregion (24) eine Blattwurzel (36) umfasst, die Außenregion (26) eine Blattspitze (38) umfasst, das Rotorblatt (16) eine Sehne (42) und eine Spanne (44) definiert;
wobei die Innenregion (24) von 0 % Spanne (44) bis 40 % Spanne (44) von der Blattwurzel (36) des Rotorblatts (16) in einer Spannenrichtung umfasst und die Außenregion (26) von 40 % Spanne (44) bis 100 % Spanne (44) von der Blattwurzel (36) des Rotorblatts (16) umfasst,
wobei die Innenregion (24) eine Übergangsregion (25) des Rotorblatts (16) umfasst, die eine maximale Sehne (48) umfasst,
**dadurch gekennzeichnet, dass** eine Sehnensteigung (50) des Rotorblatts (16) in der Übergangsregion (25) ausgehend von der maximalen Sehne (48) über 15 % der Spanne (44) des Rotorblatts (16) im Bereich von -0,06 bis 0,06 liegt,
wobei in der Innenregion (24) die Sehnensteigung (50) nicht gleich null ist.

2. Rotorblattanordnung nach Anspruch 1, wobei die Übergangsregion (25) von etwa 15 % Spanne (44) bis 30 % Spanne (44) des Rotorblatts (16) umfasst.

3. Rotorblattanordnung nach Anspruch 1, wobei in der Region der Innenregion (24), die nicht die Übergangsregion (25) ist, die Sehnensteigung (50) im Bereich von -0,15 bis 0,20 liegt und nicht gleich null ist.

4. Rotorblattanordnung nach Anspruch 1, wobei eine Änderung der Sehnensteigung (50) in der Innenregion (24) mindestens 0,00002 beträgt.

5. Rotorblattanordnung nach einem der vorangehenden Ansprüche, ferner umfassend eine Blattwurzel(36)-Region weiter innen als die maximale Sehne (48) in der Innenregion (24), wobei ein Wendepunkt von positiv nach negativ oder umgekehrt einer zweiten Ableitung der Sehnensteigung (50) in der Blattwurzel(36)-Region bei weniger als 15 % Spanne (44) liegt.

6. Rotorblattanordnung nach einem der vorangehenden Ansprüche, wobei die Sehnensteigung (50) in der Außenregion (26) in einem Wendpunkt von konkav nach konvex oder umgekehrt weniger als -0,05 beträgt.

7. Rotorblattanordnung nach einem der vorangehenden Ansprüche, wobei die Sehnensteigung (50) ausgehend von der Blattwurzel (36) zwischen 30 % Spanne (44) bis 85 % Spanne (44) weniger als -0,1 beträgt.

8. Rotorblattanordnung nach einem der vorangehenden Ansprüche, wobei eine Lage eines Wendepunkts von konkav nach konvex oder umgekehrt der Sehnensteigung (50) innerhalb von 80 % Spanne (44) liegt.

9. Rotorblattanordnung nach einem der vorangehenden Ansprüche, wobei eine Lage eines Spitzenkrümmungsradius der Sehne (42) innerhalb von 80 % Spanne (44) liegt.

10. Verfahren zum Herstellen eines Rotorblatts (16) einer Windkraftanlage (10) zum Schwächen von Lärm während Starkwindbedingungen, wobei das Verfahren Folgendes umfasst:
Bilden des Rotorblatts (16) mit einem aerodynamischen Körper (22), der eine Innenregion (24) und eine Außenregion (26) aufweist, wobei die Innen- und die Außenregion (26) eine Druckseite (28), eine Saugseite (30), eine Eintrittskante (32) und eine Austrittskante (34) definieren, wobei die Innenregion (24) eine Blattwurzel (36) und eine Übergangsregion (25), die eine maximale Sehne (48) aufweist, umfasst, wobei die Außenregion (26) eine Blattspitze (38) aufweist, wobei das Rotorblatt (16) eine Sehne (42) und eine Spanne (44) definiert, wobei die Innenregion (24) von 0 % Spanne (44) bis 40 % Spanne (44) von der Blattwurzel (36) des Rotorblatts (16) in einer Spannenrichtung umfasst und die Außenregion (26) von 40 % Spanne (44) bis 100 % Spanne (44) von der Blattwurzel (36) des Rotorblatts (16) umfasst; und
Bilden einer Sehnensteigung (50) in der Übergangsregion (25), die ausgehend von der maximalen Sehne (48) über 15 % der Spanne (44) des Rotorblatts (16) im Bereich von -0,06 bis 0,06 liegt, wobei in der Innenregion (24) die Sehnensteigung (50) nicht gleich null ist.

11. Verfahren nach Anspruch 10, wobei die Übergangsregion (25) von etwa 15 % Spanne (44) bis 30 % Spanne (44) des Rotorblatts (16) umfasst.

12. Verfahren nach Anspruch 10 oder 11, wobei in der Region der Innenregion (24), die nicht die Übergangsregion (25) ist, die Sehnensteigung (50) im Bereich von -0,15 bis 0,20 liegt und nicht gleich null ist.

## Revendications

1. Ensemble formant pale de rotor d'une éolienne (10), l'ensemble formant pale de rotor comportant :
une pale de rotor (16) comportant un corps aérodynamique (22) ayant une région intérieure (24) et une région extérieure (26), les régions intérieure et extérieure (24, 26) définissant un côté en pression (28), un côté en aspiration (30), un bord d'attaque (32), et un bord de fuite (34), la région intérieure (24) comportant un pied de pale (36), la région extérieure (26) comportant un bout de pale (38), la pale de rotor (16) définissant une corde (42) et une envergure (44) ;
dans lequel la région intérieure (24) va de 0 % de l'envergure (44) à 40 % de l'envergure (44) depuis le pied de pale (36) de la pale de rotor (16) dans une direction allant dans le sens de l'envergure et la région extérieure (26) va de 40 % de l'envergure (44) à 100 % de l'envergure (44) depuis le pied de pale (36) de la pale de rotor (16),
la région intérieure (24) comportant une région de transition (25) de la pale de rotor (16) qui comporte une corde maximale (48),
**caractérisé en ce qu'**une pente de corde (50) de la pale de rotor (16) dans la région de transition (25) va de -0,06 à 0,06 de la corde maximale (48) sur 15 % de l'envergure (44) de la pale de rotor (16),
dans lequel, dans la région intérieure (24), la pente de corde (50) n'est pas égale à zéro.

2. Ensemble formant pale de rotor selon la revendication 1, dans lequel la région de transition (25) va d'environ 15 % de l'envergure (44) à 30 % de l'envergure (44) de la pale de rotor (16).

3. Ensemble formant pale de rotor selon la revendication 1, dans lequel, dans la région de la région intérieure (24) qui n'est pas la région de transition (25), la pente de corde (50) va de -0,15 à 0,20 et n'est pas égale à zéro.

4. Ensemble formant pale de rotor selon la revendication 1, dans lequel un changement au niveau de la pente de corde (50) est au moins de 0,00002 dans la région intérieure (24).

5. Ensemble formant pale de rotor selon l'une quelconque des revendications précédentes, comportant par ailleurs une région de pied de pale (36) côté intérieur de la corde maximale (48) à l'intérieur de la région intérieure (24), dans lequel un point d'inflexion allant de positif à négatif ou vice versa d'une deuxième dérivée de la pente de corde (50) dans la région du pied de pale (36) est situé à moins de 15 % de l'envergure (44).

6. Ensemble formant pale de rotor selon l'une quelconque des revendications précédentes, dans lequel la pente de corde (50) dans la région extérieure (26) au niveau d'un point d'inflexion allant de concave à convexe ou vice versa est inférieure à -0,05.

7. Ensemble formant pale de rotor selon l'une quelconque des revendications précédentes, dans lequel la pente de corde (50) est inférieure à -0,1 entre 30 % de l'envergure (44) et 85 % de l'envergure (44) depuis le pied de pale (36).

8. Ensemble formant pale de rotor selon l'une quelconque des revendications précédentes, dans lequel un emplacement d'un point d'inflexion allant de concave à convexe ou vice versa de la pente de corde (50) se trouve dans les limites de 80 % de l'envergure (44).

9. Ensemble formant pale de rotor selon l'une quelconque des revendications précédentes, dans lequel un emplacement d'un rayon de courbure de corde (42) de crête se trouve dans les limites de 80 % de l'envergure (44).

10. Procédé de fabrication d'une pale de rotor (16) d'une éolienne (10) servant à atténuer le bruit dans des conditions de vitesses de vent élevées, le procédé comportant les étapes consistant à :
former la pale de rotor (16) avec un corps aérodynamique (22) ayant une région intérieure (24) et une région extérieure (26), les régions intérieure et extérieure (26) définissant un côté en pression (28), un côté en aspiration (30), un bord d'attaque (32), et un bord de fuite (34), la région intérieure (24) ayant un pied de pale (36) et une région de transition (25) qui comprend une corde maximale (48), la région extérieure (26) ayant un bout de pale (38), dans lequel la pale de rotor (16) définit une corde (42) et une envergure (44), dans lequel la région intérieure (24) va de 0 % de l'envergure (44) à 40 % de l'envergure (44) depuis le pied de pale (36) de la pale de rotor (16) dans une direction allant dans le sens de l'envergure et la région extérieure (26) va de 40 % de l'envergure (44) à 100 % de l'envergure (44) depuis le pied de pale (36) de la pale de rotor (16) ; et,
former une pente de corde (50) dans la région de transition (25) allant de -0,06 à 0,06 de la corde maximale (48) sur 15 % de l'envergure (44) de la pale de rotor (16), dans lequel, dans la région intérieure (24), la pente de corde (50) n'est pas égale à zéro.

11. Procédé selon la revendication 10, dans lequel la région de transition (25) va d'environ 15 % de l'envergure (44) à 30 % de l'envergure (44) de la pale de rotor (16).

12. Procédé selon les revendications 10 ou 11, dans lequel, dans la région de la région intérieure (24) qui n'est pas la région de transition (25), la pente de corde (50) va de -0,15 à 0,20 et n'est pas égale à zéro.
